# EUROPEAN PATENT APPLICATION

(11) **EP 4 530 044 A1**
(43) Date of publication of application: **02.04.2025**
(21) Application number: 24201007.2
(22) Date of filing: 18.09.2024
(51) Int. Cl.: B29C 45/27, B29C 44/38, B29C 44/42

(54) **INJECTION MOLDING SYSTEM AND METHOD**

(30) Priority: 28.09.2023 US 202363585971 P; 20.06.2024 US 202418748101
(71) Applicant: King Steel Machinery Co., Ltd., Taichung City 407 (TW)
(72) Inventor: Chen, Ching-Hao, Taichung City 407 (TW); Yeh, Liang-Hui, Taichung City 402 (TW)
(74) Representative: Michalski Hüttermann & Partner Patentanwälte mbB

(57) **Abstract**

An injection molding method is provided. A molding device and a runner plate over the molding device are provided. The molding device includes a first mold, a second mold over the first mold, and a mold cavity defined by the first mold and the second mold. The runner plate includes first and second runners communicable with the mold cavity and extending within the runner plate. A divider is placed within the runner plate, and the divider has a passage connectable to the first runner or the second runner. A mixture is injected into the mold cavity through the passage and the first runner, and the first mixture fails to flow into the mold cavity through the passage and the second runner. A foamed article is formed from the mixture inside the mold cavity.

## Description

### CROSS-REFERENCE TO RELATED APPLICATION

The present application claims priority to U.S. Provisional Patent Application No. 63/585,971, filed on September 28, 2023 and U.S. Patent Application No. 18/748,101, filed on June 20, 2024, which are incorporated by reference herein in their entirety.

### TECHNICAL FIELD

The present disclosure is related to an injection molding system and an injection molding method, and, in particular, to an injection molding system and an injection molding method for preventing formation of slug or scrap within runners of a runner plate.

### BACKGROUND

Foamed polymeric material has many advantages, such as high strength, low weight, impact resistance, thermal insulation, and others. Foamed articles can be made by injection molding or extrusion molding. For example, after the polymeric material is melted and mixed with a blowing agent to form a mixture, a force or pressure is applied to the mixture to inject or extrude the mixture into a cavity of a mold, and the mixture is foamed and cooled in the cavity to form the foamed article.

However, it is necessary to improve smooth flow of the mixture in the injection molding system to ensure that the formation of the foamed article is not affected. Therefore, there is a need for improvements to structures of the injection-molding system and the method for making foamed articles.

### BRIEF SUMMARY OF THE DISCLOSURE

The present disclosure discloses an injection molding system and an injection molding method.

According to one embodiment of the present disclosure, an injection molding method is provided. The injection molding method includes: providing a molding device and a runner plate over the molding device, wherein the molding device comprises a first mold, a second mold over the first mold, and a mold cavity defined by the first mold and the second mold, and the runner plate includes first and second runners communicable with the mold cavity and extending within the runner plate; placing a first divider within the runner plate, wherein the first divider has a passage connectable to the first runner or the second runner; injecting a first mixture into the mold cavity through the passage and the first runner, wherein the first mixture fails to flow into the mold cavity through the passage and the second runner; and, forming a first foamed article from the first mixture inside the mold cavity.

According to one embodiment of the present disclosure, an injection molding method is provided. The injection molding method includes: providing a molding device and a runner plate over the molding device, wherein the molding device comprises a first mold, a second mold over the first mold, and a mold cavity defined by the first mold and the second mold, the runner plate includes first and second runners communicable with the mold cavity and extending within the runner plate; inserting a first plug into the first runner; injecting a first mixture into the mold cavity through the second runner, wherein the first mixture fails to flow into the mold cavity through the first runner; and, forming a first foamed article from the first mixture inside the mold cavity.

According to one embodiment of the present disclosure, an injection molding system is provided. The injection molding system includes a molding device, a runner plate, and a divider. The molding device includes a first mold, a second mold over the first mold and a mold cavity defined by the first mold and the second mold engaged with the first mold. The runner plate is disposed over the molding device and includes first and second runners communicable with the mold cavity and extending within the runner plate. The divider is disposed within the runner plate and having a passage connectable to the first runner or the second runner. The divider is configured to block a mixture flowing into the mold cavity through one of the first and second runners and allow the mixture flowing into the mold cavity through the passage and another one of the first and second runners.

### BRIEF DESCRIPTION OF THE DRAWINGS

Aspects of the present disclosure are best understood from the following detailed description when read with the accompanying figures. It should be noted that, in accordance with the standard practice in the industry, various features are not drawn to scale. In fact, the dimensions of the various features may be arbitrarily increased or reduced for clarity of discussion.
FIG. 1 is a schematic of an injection molding system in accordance with some embodiments of the present disclosure.
FIGs. 2 and 3 are front perspective views of the injection molding system in accordance with some embodiments of the present disclosure.
FIG. 4 illustrates a top cross-sectional view of the runner plate along a line AA' in FIG. 2 in accordance with some embodiments of the present disclosure.
FIG. 5 is a side perspective view of the injection molding system along a line BB' in FIG. 2 in accordance with some embodiments of the present disclosure.
FIG. 6 is a front perspective view of the injection molding system in accordance with some embodiments of the present disclosure.
FIGs. 7 and 8 illustrate top cross-sectional views of the runner plate along a line AA' in FIG. 6 in accordance with some embodiments of the present disclosure.
FIG. 9 is a front perspective view of the injection molding system in accordance with some embodiments of the present disclosure.
FIG. 10 illustrates a top cross-sectional view of the runner plate along a line AA' in FIG. 9 in accordance with some embodiments of the present disclosure.
FIG. 11 is a front perspective view of the injection molding system in accordance with some embodiments of the present disclosure.
FIGs. 12 and 13 illustrate top cross-sectional views of the runner plate along a line AA' in FIG. 11 in accordance with some embodiments of the present disclosure.
FIG. 14 is a front perspective view of the injection molding system in accordance with some embodiments of the present disclosure.
FIGs. 15 and 16 illustrate top cross-sectional views of the runner plate along a line AA' in FIG. 14 in accordance with some embodiments of the present disclosure.
FIG. 17 is a flowchart showing an injection molding method in accordance with some embodiments of the present disclosure.
FIGs. 18-22 are schematic cross-sectional views illustrating exemplary stages in the injection molding method of FIG. 17 according to one embodiment of the present disclosure.
FIG. 23 is a flowchart showing an injection molding method in accordance with some embodiments of the present disclosure.
FIGs. 24-32 are schematic cross-sectional views illustrating exemplary stages in the injection molding method of FIG. 23 according to one embodiment of the present disclosure.

### DETAILED DESCRIPTION

The following disclosure provides many different embodiments, or examples, for implementing different features of the provided subject matter. Specific examples of components and arrangements are described below to simplify the present disclosure. These are, of course, merely examples and are not intended to be limiting. For example, the formation of a first feature over or on a second feature in the description that follows may include embodiments in which the first and second features are formed in direct contact, and may also include embodiments in which additional features may be formed between the first and second features, such that the first and second features may not be in direct contact. In addition, the present disclosure may repeat reference numerals and/or letters in the various examples. This repetition is for the purpose of simplicity and clarity and does not in itself dictate a relationship between the various embodiments and/or configurations discussed.

Further, spatially relative terms, such as "beneath," "below," "lower," "above," "upper" and the like, may be used herein for ease of description to describe one element or feature's relationship to another element(s) or feature(s) as illustrated in the figures. The spatially relative terms are intended to encompass different orientations of the device in use or operation in addition to the orientation depicted in the figures. The apparatus may be otherwise oriented (rotated 90 degrees or at other orientations) and the spatially relative descriptors used herein may likewise be interpreted accordingly.

Notwithstanding that the numerical ranges and parameters setting forth the broad scope of the disclosure are approximations, the numerical values set forth in the specific examples are reported as precisely as possible. Any numerical value, however, inherently contains certain errors necessarily resulting from the standard deviation found in the respective testing measurements. Also, as used herein, the term "about" generally means within 10%, 5%, 1%, or 0.5% of a given value or range. Alternatively, the term "about" means within an acceptable standard error of the mean when considered by one of ordinary skill in the art. Other than in the operating/working examples, or unless otherwise expressly specified, all of the numerical ranges, amounts, values and percentages, such as those for quantities of materials, durations of times, temperatures, operating conditions, ratios of amounts, and the likes thereof disclosed herein, should be understood as modified in all instances by the term "about." Accordingly, unless indicated to the contrary, the numerical parameters set forth in the present disclosure and the attached claims are approximations that can vary as desired. At the very least, each numerical parameter should be construed in light of the number of reported significant digits and by applying ordinary rounding techniques. Ranges can be expressed herein as from one endpoint to another endpoint or between two endpoints. All ranges disclosed herein are inclusive of the endpoints, unless specified otherwise.

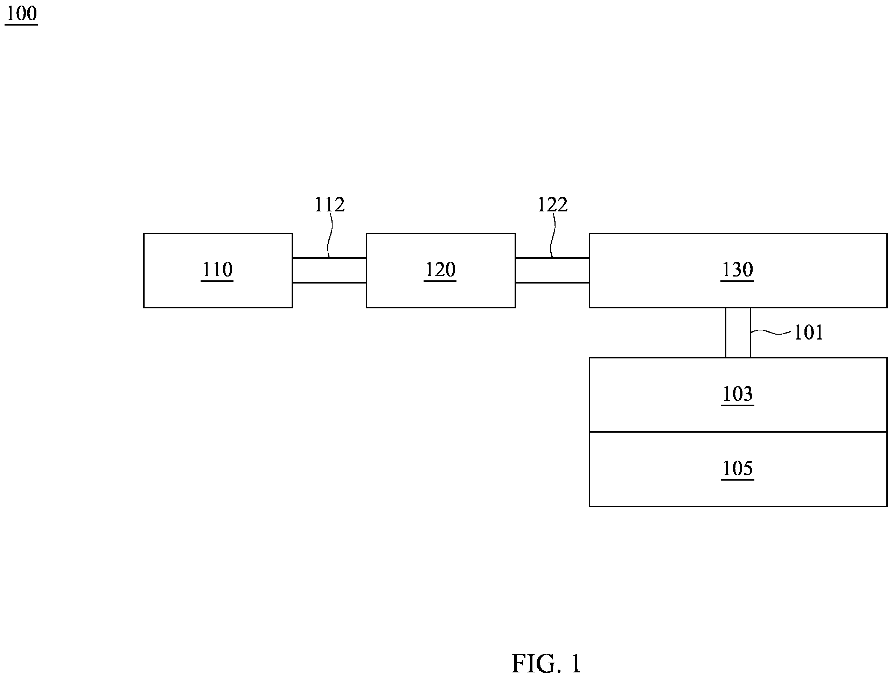

FIG. 1 is a schematic of an injection molding system 100 in accordance with some embodiments of the present disclosure. The injection molding system 100 includes a melting unit 110, a mixing unit 120, an injection unit 130, an injector 101 communicable with the injection unit 130, a runner plate 103 embedded with runners therein, and a molding device 105 communicable with the runners within the runner plate 103.

The melting unit 110 is configured to produce a polymeric material (e.g. thermoplastic polyurethane (TPU), polyurethane (PU), plastics or the like) in a molten state. The polymeric material is then delivered to the mixing unit 120 through at least one delivery channel 112. The mixing unit 120 is configured to produce a mixture of the polymeric material and a physical blowing agent (e.g. gaseous nitrogen, carbon dioxide, supercritical fluid or the like). The mixture is foamable or slightly foamable. The mixture is then delivered to the injection unit 130 through at least one delivery channel 122. The injection unit 130 is configured to discharge the mixture to the molding device 105 through the injection unit 130 and the runner plate 103.

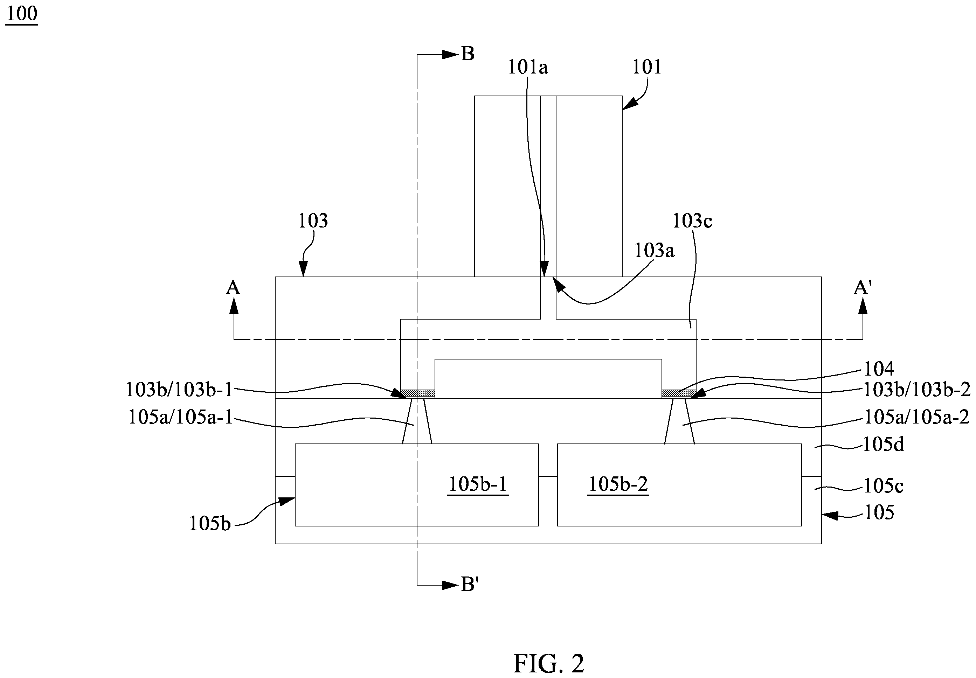

FIG. 2 is a front perspective view of the injection molding system 100 in accordance with some embodiments of the present disclosure.

In some embodiments, the molding device 105 is configured to form an article containing polymeric material. In some embodiments, the molding device 105 includes a first mold 105c, a second mold 105d, at least one feeding port 105a through the second mold 105d, at least one mold cavity 105b defined by the first mold 105c and the second mold 105d when the molding device 105 is in a closed state (i.e., the first mold 105c is engaged with the second mold 105d). In some embodiments, the first mold 105c is a lower mold, and the second mold 105d is an upper mold and is disposed above the first mold 105c. In some embodiments, each of the mold cavities 105b is communicable with at least one of the feeding ports 105a. In some embodiments, the article is formed inside the molding device 105 by physical foaming. The mixture undergoes physical foaming and then forms a foamed article. In some embodiments, the article is a part of a footwear (such as outsole, insole, midsole, etc.) or any other products.

In some embodiments, the injector 101 has an outlet 101a for discharging the mixture. In some embodiments, the injector 101 is engageable with the runner plate 103. In some embodiments, the outlet 101a is engageable and communicable with an inlet 103a of the runner plate 103. The mixture can flow from the outlet 101a to the inlet 103a and towards multiple outlets 103b of the runners 103c along the runners 103c, respectively. In some embodiments, the mixture can flow from the injector 101 into each of the mold cavities 105b through the runner plate 103 and the corresponding feeding ports 105a. In some embodiments, the mixture can flow into the mold cavities 105b-1 and 105b-2 through the feeding ports 105a-1 and 105a-2, respectively. The mixture would be distributed into each runner 103c and then enters into the mold cavities 105b correspondingly.

In some embodiments, each of the outlets 103b is communicable with at least one mold cavity 105b defined by the molding device 105. In some embodiments, the molding device 105 includes multiple mold cavities 105b-1, and 105b-2. The embodiment of FIG. 2 illustrates two mold cavities 105b-1 and 105b-2, however it is not intended to limit the number of mold cavities 105b in the molding device 105.

In some embodiments, a gate 104 is disposed at the outlet 103b of the runner plate 103. The gate 104 is configured to control the flow of the mixture (such as flow rate, amount, etc.) through the outlet 103b into the mold cavity 105b. In some embodiments, the mixture can flow into the mold cavity 105b through the outlet 103b when the gate 104 is open or partially open, while the mixture cannot flow into the mold cavity 105b through the outlet 103b when the gate 104 is closed. The states of the gate 104 can be switched automatically or manually.

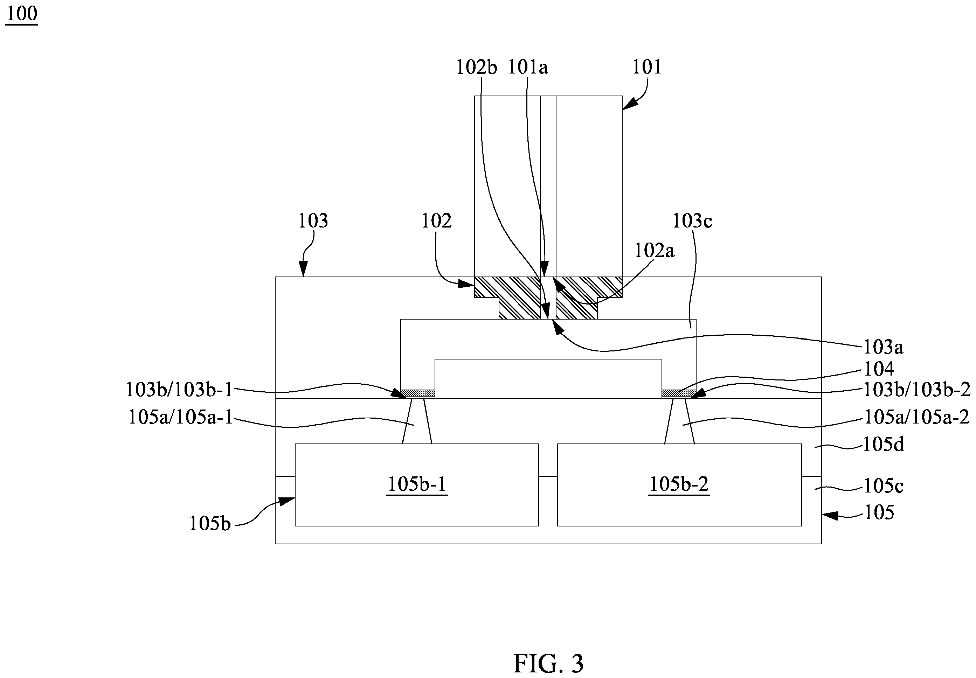

FIG. 3 is a front perspective view of the injection molding system 100 in accordance with some embodiments of the present disclosure. In the embodiment of FIG. 3, the injection molding system 100 further includes a sprue 102 engageable with the injector 101. The outlet 101a of the injector 101 is engageable with an inlet 102a of the sprue 102, such that the mixture can flow from the injector 101 into the sprue 102. In some embodiments, the sprue 102 is at least partially surrounded by the runner plate 103. In some embodiments, the sprue 102 is disposed above the runners 103c. The sprue 102 is configured to facilitate the engagement of the injector 101 with the runner plate 103. The mixture can flow from the inlet 102a towards an outlet 102b of the sprue 102. In some embodiments, the outlet 102b of the sprue 102 is engageable and communicable with the inlet 103a of multiple runners 103c. The mixture can flow from the inlet 103a towards several outlets 103b of the runners 103c along the runners 103c, respectively. In some embodiments, the mixture can flow from the injector 101 into each of the mold cavities 105b through the sprue 102, the runner plate 103 and the corresponding feeding ports 105a, as shown in FIG. 3.

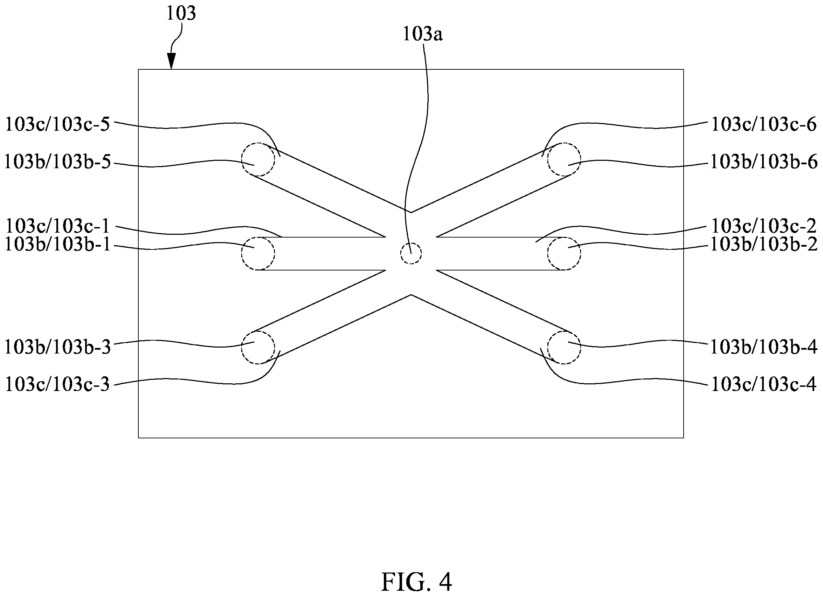

FIG. 4 illustrates a top cross-sectional view of the runner plate 103 along a line AA' in FIG. 2 in accordance with some embodiments of the present disclosure. In some embodiments, the runner plate 103 can be heated by a heater, a coil or the like in order to maintain the runner 103c at a certain temperature and allow the mixture maintaining in a flowable state. In some embodiments, each runner 103c extends within the runner plate 103. Each runner 103c connects the inlet 103a to the respective outlet 103b. FIG. 4 shows six runners 103c extending within the runner plate 103, however it is not intended to limit the number of runners 103c within the runner plate 103. Further, it is not intended to limit the configuration or design of the runners 103c. In some embodiments, the inlet 103a couples to the runners 103c-1, 103c-2, 103c-3, 103c-4, 103c-5, and 103c-6. In some embodiments, the runners 103c-1, 103c-2, 103c-3, 103c-4, 103c-5, and 103c-6 couples to the outlets 103b-1, 103b-2, 103b-3, 103b-4, 103b-5, 103b-6, respectively.

The runners 103c have same or different dimensions (e.g. width, diameter, length, etc.). In some embodiments, the runners 103c-1, 103c-2, 103c-3, 103c-4, 103c-5, and 103c-6 have the same width, the same diameter, and the same length. In some embodiments, the runners 103c are divided into multiple groups with different dimensions, and each group of runners 103c have individual dimensions (e.g. width, diameter, length, etc.).

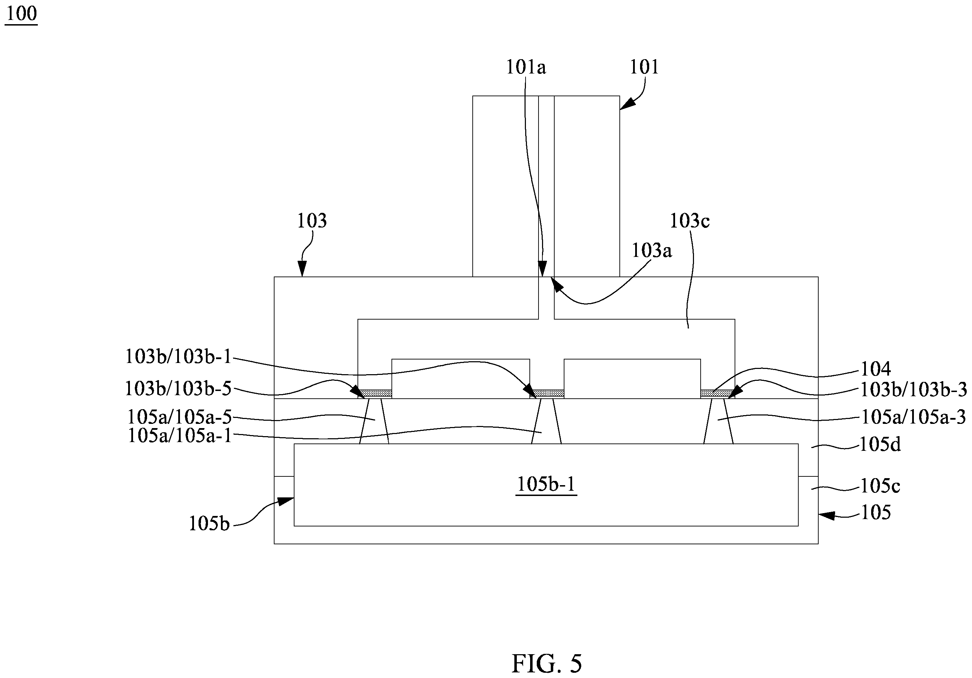

FIG. 5 is a side perspective view of the injection molding system 100 along a line BB' in FIG. 2 in accordance with some embodiments of the present disclosure. In the embodiment of FIG. 5, the mixture can flow from the injector 101 into the mold cavity 105b-1 through the outlets 103b-1, 103b-3 and 103b-5 of the runner plate 103 and the corresponding feeding ports 105a-1, 105a-3 and 105a-5. FIG. 5 illustrates each of the mold cavities 105b corresponds to three outlets 103b, however it is also not intended to limit the number of outlets 103b corresponding to one mold cavity 105b.

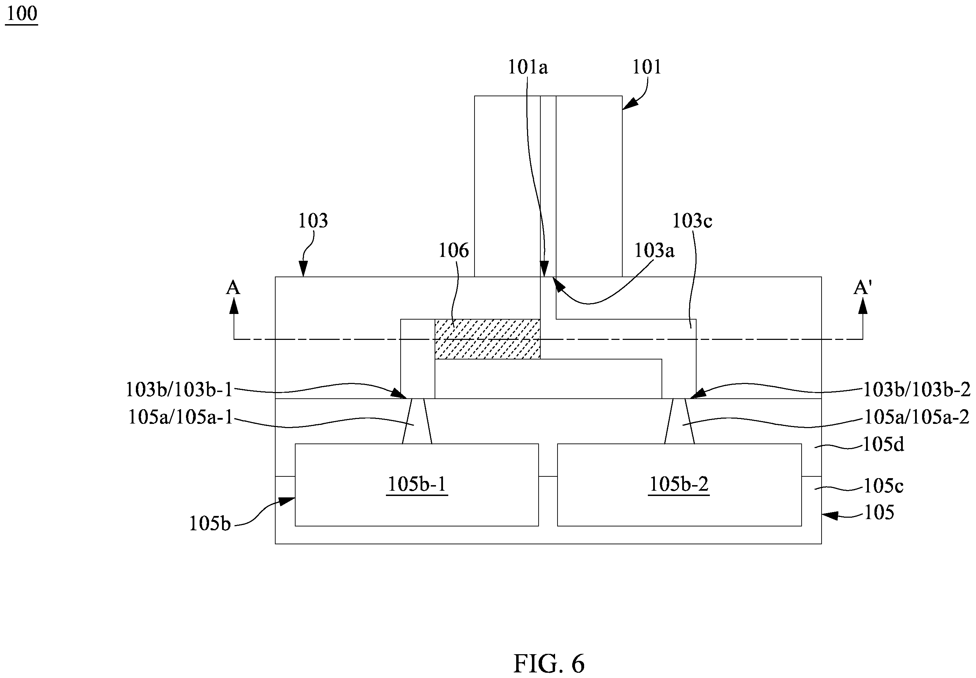

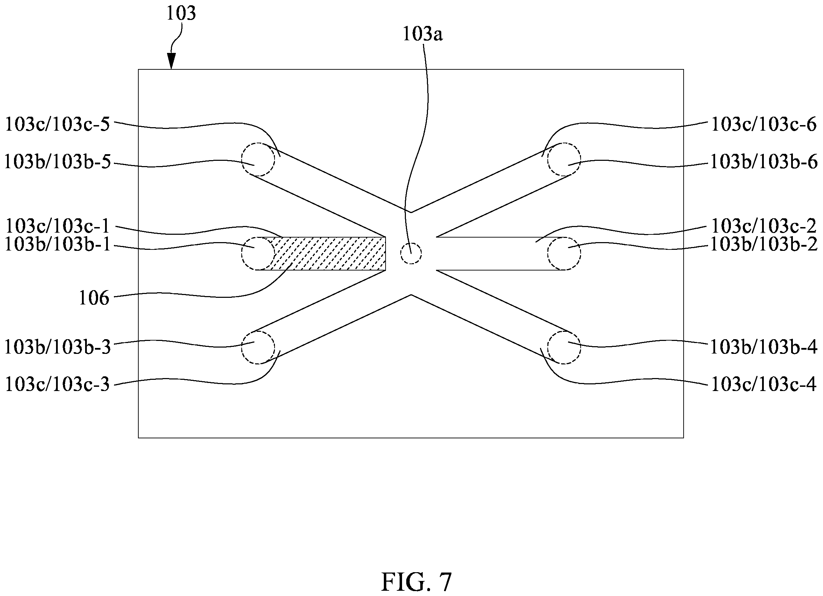

FIG. 6 is a front perspective view of the injection molding system 100 in accordance with some embodiments of the present disclosure. In the embodiment of FIG. 6, a plug 106 is placed into the runner plate 103. FIG. 7 illustrates a top cross-sectional view of the runner plate 103 along a line AA' in FIG. 6 in accordance with some embodiments of the present disclosure.

In some embodiments, the plug 106 is a plastic block, a metallic block or the like. In some embodiments, the plug 106 is inserted into the runner 103c, such that the mixture cannot flow through the runner 103c. In some embodiments, the plug 106 is temporarily fixed inside the runner 103c and is removable from the runner 103c. For example, the plug 106 is placed within the runner 103c-1, so that the mixture cannot flow into the mold cavity 105b-1 through the runner 103c-1, while the mixture can still flow into the mold cavity 105b-1 through other runners 103c-3 and 103c-5. In some embodiments, the plug 106 can be placed or removed when the runner plate 103 is engaged with the molding device 105. In some embodiments, the plug 106 can be placed or removed when the runner plate 103 is disengaged with the molding device 105. In some embodiments, the plug 106 can be placed or removed when the sprue 102 of FIG. 3 is removed from the runner plate 103.

When the mixture is injected into the mold cavity 105b, some of the mixture may remain within the runner 103c (e.g. because the mixture is viscous, etc.). The mixture remained in the runner 103c may prevent or even block the mixture subsequently injected from the injector 101 to flow through the runner 103c. That is, the next shot of the mixture may fail to flow or may be unable to smoothly flow into the mold cavity 105b. Since the plug 106 can be placed or removed when necessary, formation of slug or scrap of the mixture within the runner 103c can be prevented, and residual mixture remained within the runner 103c for a long time can be avoided. Further, it is readily to adjust the number of runners 103c to be used by simply adding or removing the plugs 106, without changing to another runner plate 103 in different configuration. As a result, manufacturing cost and manpower can be saved. In some embodiments, the plug 106 can be placed or removed manually or remotely.

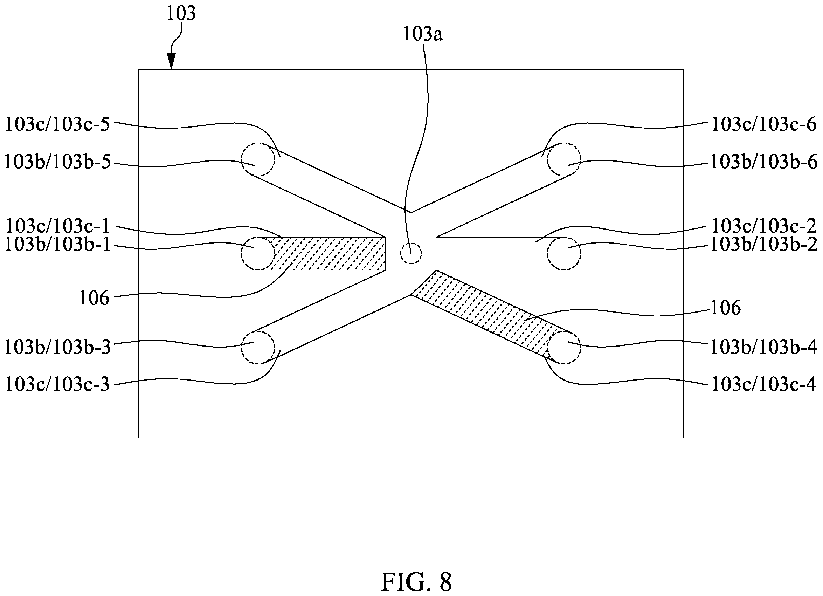

FIG. 8 illustrates multiple plugs 106 are placed within the runners 103c-1 and 103c-4, respectively. It would be understood that it is not intended to limit the number of plugs 106. In some embodiments, the plug 106 can be placed or removed manually or by a robotic arm or the like. In some embodiments, the plug 106 is replaced periodically. For example, after the plug is removed from the runner 103c-1, another plug is reinserted into the runner 103c-1.

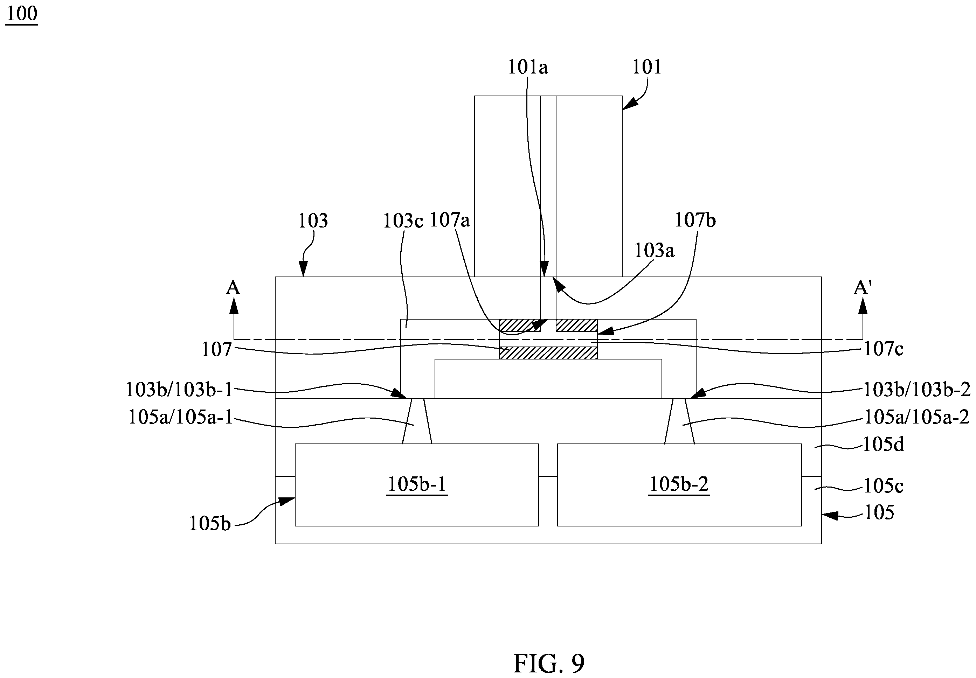

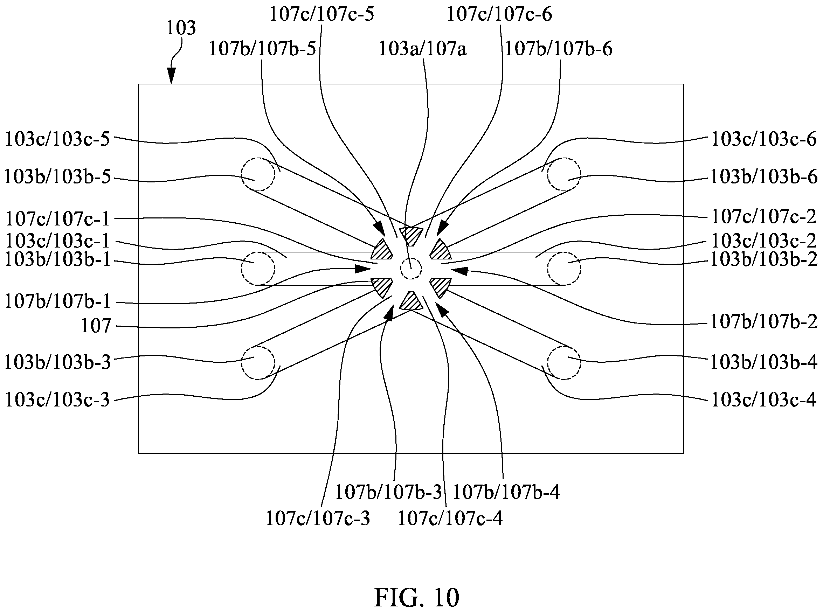

FIG. 9 is a front perspective view of the injection molding system 100 in accordance with some embodiments of the present disclosure. In the embodiment of FIG. 9, a divider 107 is placed within the runner plate 103. FIG. 10 illustrates a top cross-sectional view of the runner plate 103 along a line AA' in FIG. 9 in accordance with some embodiments of the present disclosure.

In some embodiments, the mixture can be distributed to each runner 103c by the divider 107. In some embodiments, the mixture can be evenly distributed to each runner 103c by the divider 107. In some embodiments, the divider 107 includes an inlet 107a, multiple outlets 107b and multiple passages 107c between the inlet 107a and the outlets 107b. The inlet 107a of the divider 107 is coupled to the inlet 103a of the runner plate 103, so the mixture can flow from the injector 101 into the runners 103c through the divider 107. Each passage 107c corresponds to one outlet 107b. In the embodiment of FIG. 10, six passages 107c-1, 107c-2, 107c-3, 107c-4, 107c-5 and 107c-6 coupled to the outlets 107b-1, 107b-2, 107b-3, 107b-4, 107b-5 and 107b-6, respectively. It would be understood that it is not intended to limit the number of passages 107c, as long as the number of the passages 107c corresponds to the number of the outlets 107b. In some embodiments, the divider 107 is a splitter or the like. In some embodiments, the divider 107 is rotatable relative to the runners 103c and the runner plate 103. In some embodiments, the divider 107 is rotatable manually or remotely. In some embodiments, the divider 107 is rotatable by a robotic arm or the like. In some embodiments, a dimension (e.g. width, diameter, length, etc.) of the runner 103c is substantially greater than a dimension of the passage 107c.

In some embodiments, the divider 107 is temporarily fixed inside the runners 103c and is removable from the runners 103c. When one shot of the mixture is injected into the mold cavity 105b, some of the mixture may remain within the runner 103c because the mixture is viscous. The mixture remained in the runner 103c may then be cooled down and solidified, resulting in preventing or even blocking the next shot of the mixture flowing through the passage 107c. That is, the next shot of the mixture may fail to flow or may be unable to smoothly flow into the mold cavity 105b. Such problem can be addressed by simply removing the divider 107 from the runner plate 103 and replacing by another new divider 107. Since the divider 107 can be placed or removed when necessary, residual mixture remained within the runner 103c for a long time can be avoided. Further, it is readily to adjust the number of runners 103c to be used by simply changing the divider 107 in different configurations (such as different number of passages 107c, etc.), without changing to another runner plate 103. As a result, manufacturing cost and manpower can be saved. In some embodiments, the divider 107 can be placed or removed manually or remotely. In some embodiments, the divider 107 can be replaced or removed by a robotic arm or the like.

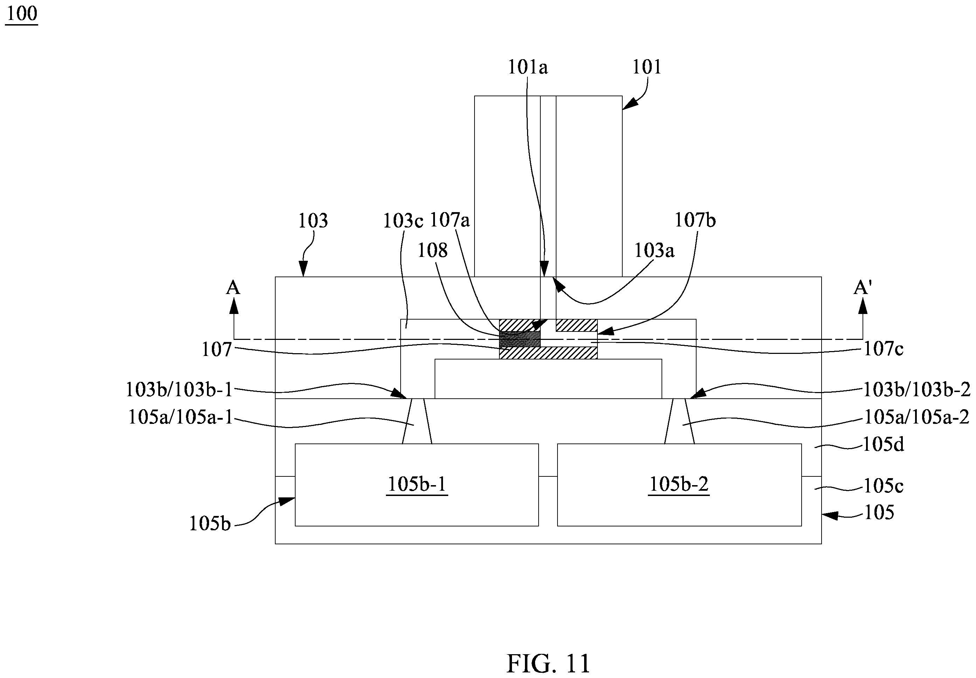

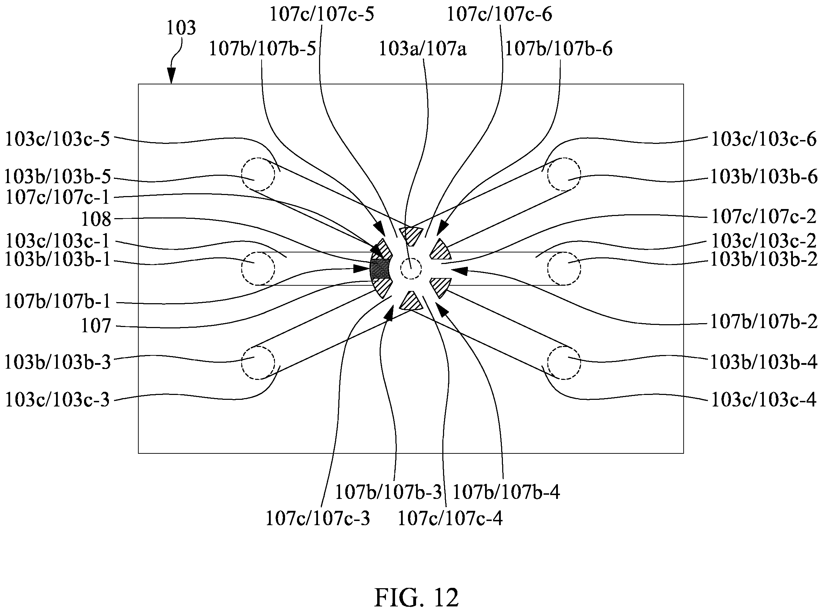

FIG. 11 is a front perspective view of the injection molding system 100 in accordance with some embodiments of the present disclosure. In the embodiment of FIG. 11, a block 108 is placed within the passage 107c of the divider 107. FIG. 12 illustrates a top cross-sectional view of the runner plate 103 along a line AA' in FIG. 11 in accordance with some embodiments of the present disclosure.

In some embodiments, the block 108 is inserted into the passage 107c of the divider 107, such that the mixture cannot flow through the passage 107c. In some embodiments, the block 108 is a plastic block, a metallic block, or the like. In some embodiments, the block 108 is temporarily fixed inside the passage 107c and is removable from the passage 107c. For example, the block 108 is placed within the passage 107c-1, so that the mixture cannot flow into the mold cavity 105b-1 through the passage 107c-1 and the runner 103c-1, while the mixture can still flow into the mold cavity 105b-1 through the passages 107c-3 and 107c-5 and the corresponding runners 103c-3 and 103c-5. Since the block 108 can be placed or removed when necessary, formation of slug or scrap of the mixture within the runner 103c can be prevented, and residual mixture remained within the runner 103c can be minimized or avoided. Further, it is readily to adjust the number of runners 103c to be used by simply adding or removing the block 108, without changing to another runner plate 103. As a result, manufacturing cost and manpower can be saved.

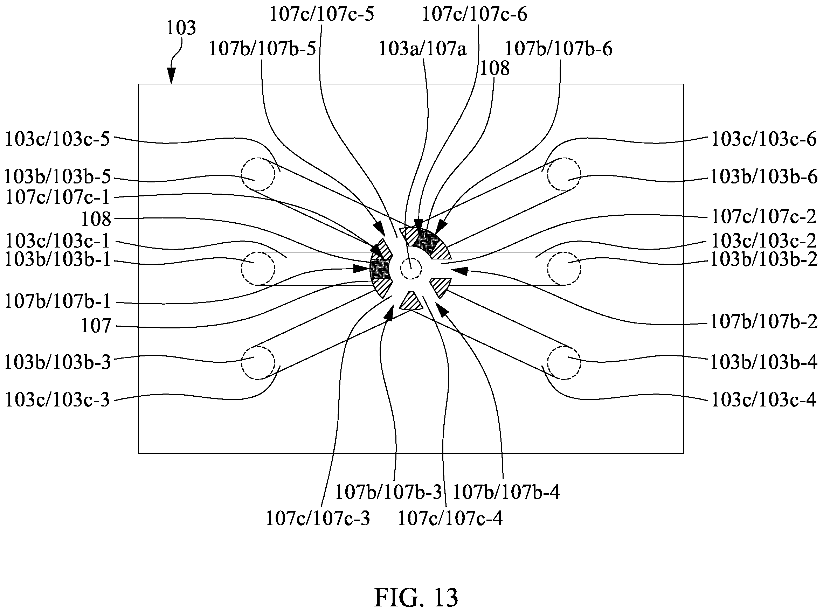

FIG. 13 illustrates a top cross-sectional view of the runner plate 103 along a line AA' in FIG. 11 in accordance with some embodiments of the present disclosure. In the embodiment of FIG. 13, more blocks 108 are placed within the passages 107c-1 and 107c-6, respectively. It would be understood that it is not intended to limit the number of blocks 108. In some embodiments, the block 108 can be placed or removed manually or remotely. In some embodiments, the block 108 can be placed or removed by a robotic arm or the like.

In some embodiments, instead of placing the block 108 within the passage 107c of the divider 107 to prevent the mixture flowing through the passage 107c, the divider 107 is configured with lesser number of passages 107c (e.g. compared with the number of the runners 103c).

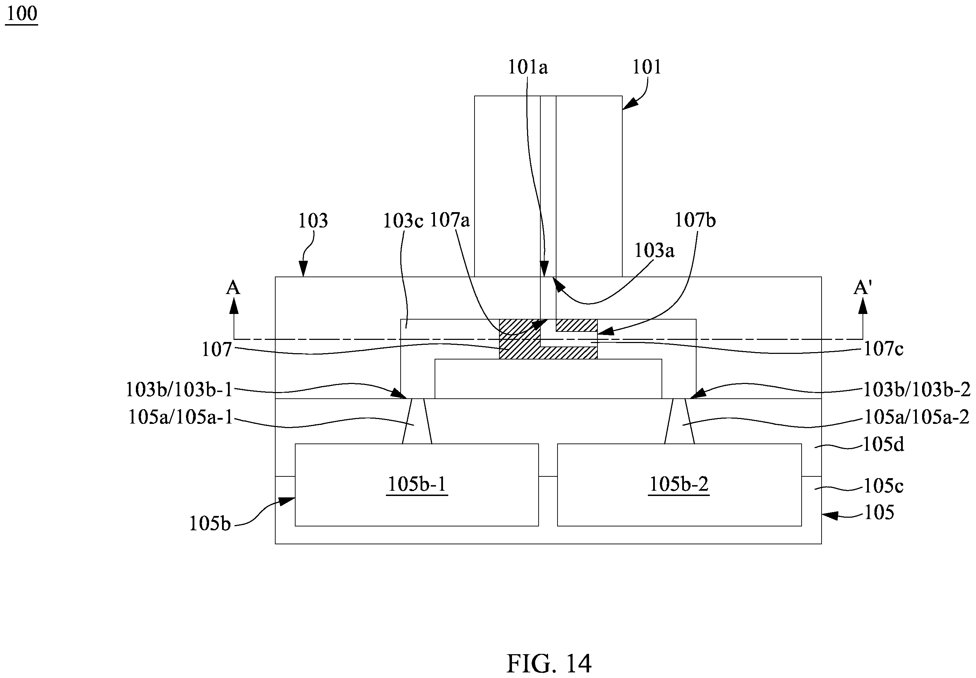

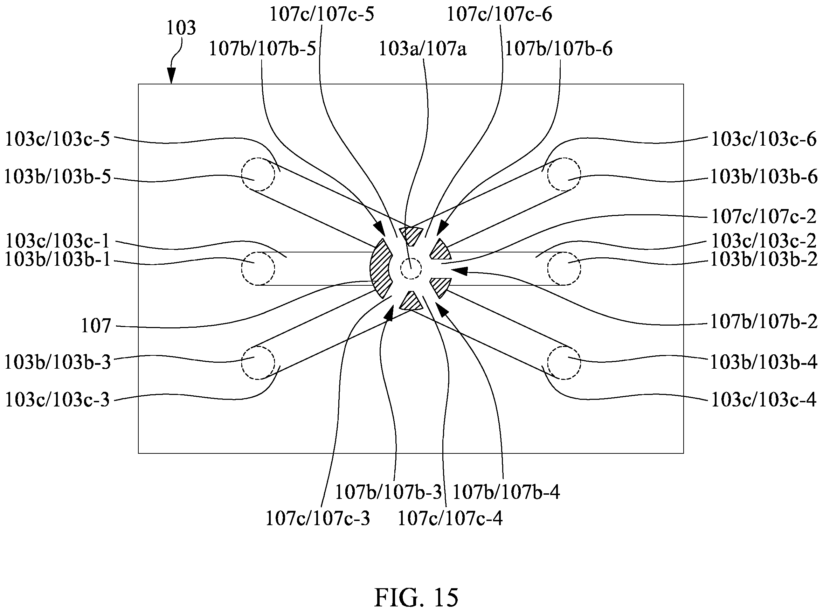

FIG. 14 is a front perspective view of the injection molding system 100 in accordance with some embodiments of the present disclosure. FIG. 15 illustrates a top cross-sectional view of the runner plate 103 along a line AA' in FIG. 14 in accordance with some embodiments of the present disclosure.

In the embodiment of FIGs. 14 and 15, the divider 107 is configured with lesser number of passages 107c. For example, the passage 107c-1 (shown in FIG. 13) is absent in the divider 107, as such no mixture can flow into the runner 103c-1. In other words, the divider 107 is designed to block the runner 103c-1. In the embodiment, when the divider 107 is placed in the runner plate 103, the passages 107c-2 through 170c-6 are configured to be aligned with the runners 103c-2 through 103c-6 and not aligned with the runner 103c-1.

In some embodiments, the divider 107 is rotatable within the runners 103c, so that the divider 107 is designed to block one or more of the runners 103c. For example, if the divider 107 in FIG. 15 is rotated clockwisely (e.g. about 15°), the runner 103c-5 is blocked by the divider 107 while the runner 103c-1 becomes communicable with the passage 107c-3. Therefore, the mixture flowing through the runners 103c can be selected by the rotation of the divider 107. In some embodiments, the divider 107 can be in various configurations.

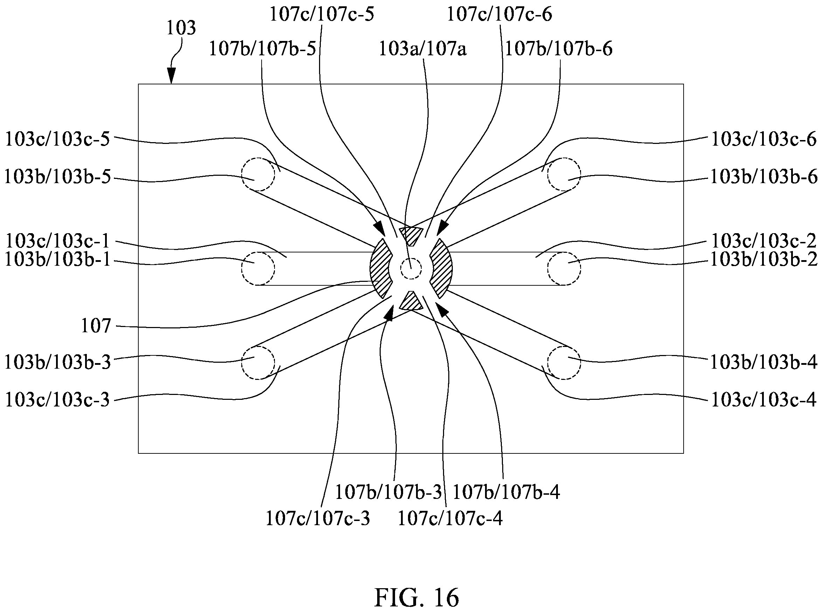

FIG. 16 illustrates another configuration of the divider 107 in accordance with some embodiments of the present disclosure. In FIG. 16, the divider 107 has four passages 107c, so that two of runners 103c are blocked. It would be understood that it is not intended to limit the number of passages 107c. If the divider 107 in FIG. 16 is rotated clockwisely (e.g. about 15°), the runners 103c-5 and 103c-4 are blocked by the divider 107 while the runners 103c-1, 103c-2, 103c-3 and 103c-6 become communicable with the corresponding passages 107c-3, 107c-4, 107c-5 and 107c-6.

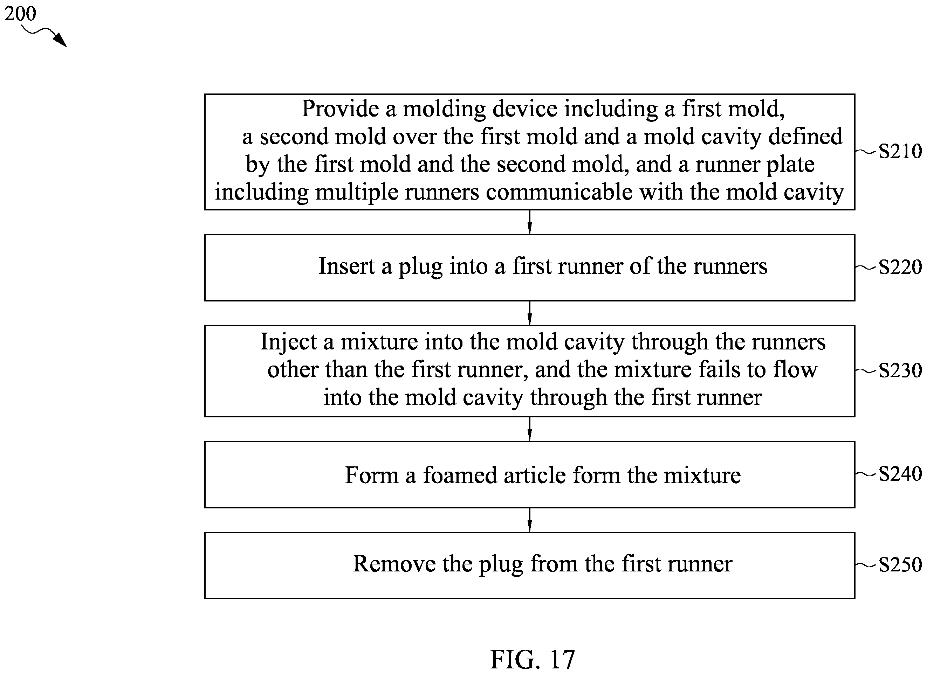

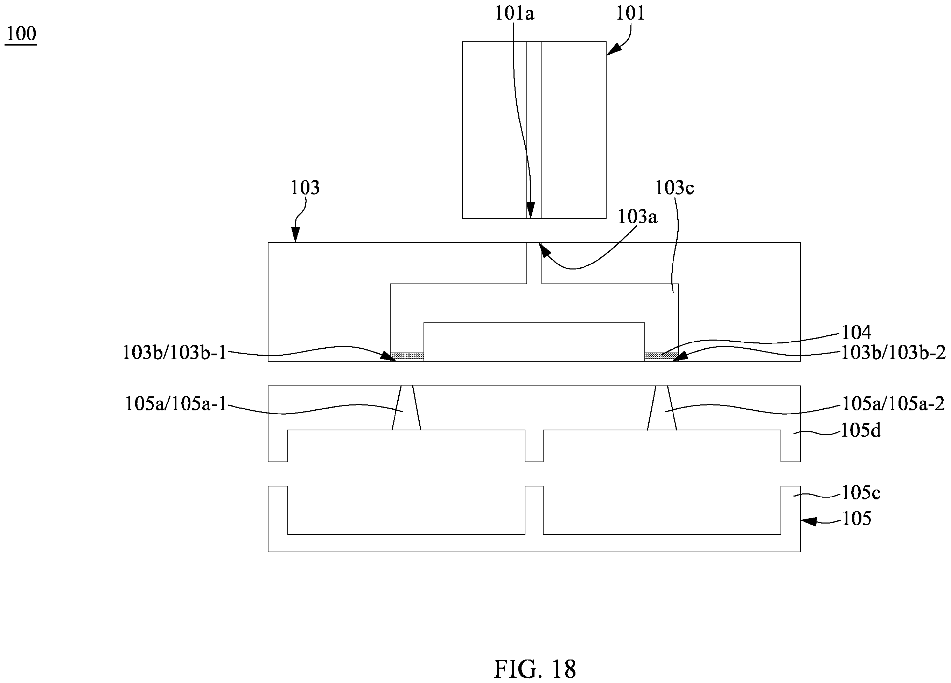

FIG. 17 is a flowchart showing an injection molding method 200 in accordance with some embodiments of the present disclosure. The injection molding method 200 includes the operations S210 through S250, and the description and illustrations are not deemed as a limitation of the sequence of the operations S210 through S250. FIGs. 18-22 are schematic cross-sectional views of various stages of the injection molding method 200. In some embodiments, the operations of the injection molding method 200 can be repeated and performed automatically. In some embodiments, the injection molding method 200 is performed by the injection molding system 100 of FIG. 1.

In operation S210, the molding device 105 and the runner plate 103 are provided. In some embodiments, the molding device 105 includes the first mold 105c, the second mold 105d and a mold cavity 105b defined by the first mold 105c and the second mold 105d engaged with each other, and the runner plate 103 includes multiple runners 103c extending within the runner plate 103. In operation S220, a plug is inserted into a first runner 103c of the runners 103c. In operation S230, the injection unit 130 is configured to inject a mixture from the mixing unit 120 into the mold cavity 105b of the molding device 105 through the injector 101 and the runners 103c other than the first runner 103c (i.e., the runner 103c with the plug inserted), and then a foamed article is formed from the mixture in operation S240. It should be noted that the mixture from the injection unit 130 fails to flow into the mold cavity 105b through the first runner 103c. In operation S250, the plug is removed from the first runner 103c of the runner plate 103 after the formation of the foamed article. The plug is insertable into or removable from the runner 103c when the runner plate 103 is disposed on the molding device 105.

In some embodiments, before the plug is inserted in operation S220 or after the plug is removed in operation S250, the injection unit 130 is configured to inject the mixture (or another mixture) into the mold cavity 105b through the injector 101 and all runners 103c, and then another foamed article is formed from the mixture.

In some embodiments, after forming the foamed article in operation S240, an additional plug is inserted into one of the runners 103c other than the first runner, and then the operation S250 is performed or ignored for the next injection (or the next shot) of the mixture.

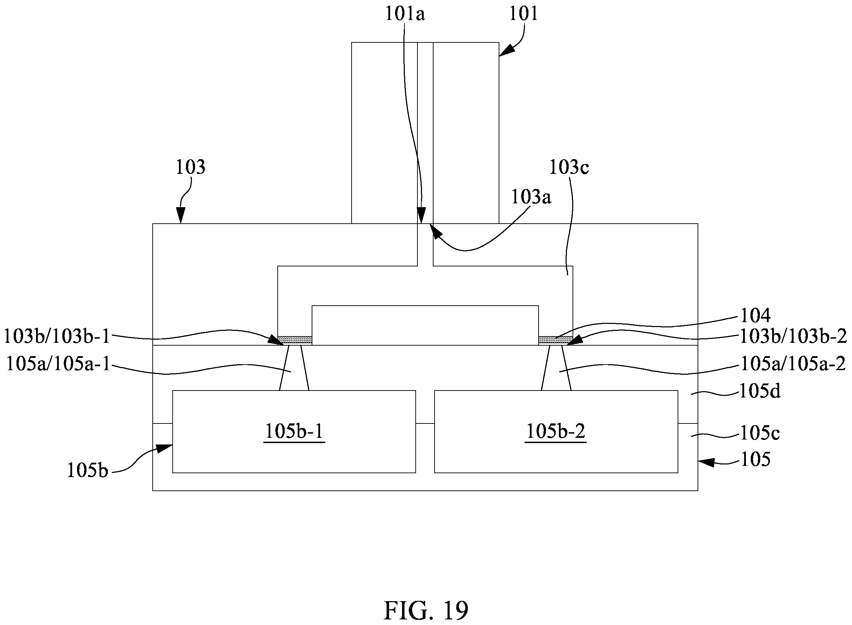

FIG. 18 is a front perspective view of the injection molding system 100 in accordance with some embodiments of the present disclosure. The injection molding system 100 includes an injector 101, a runner plate 103 and a molding device 105. The injector 101 is then engaged with the runner plate 103, and the molding device 105 is engaged with the runner plate 103 as shown in FIG. 19. A first mold 105c of the molding device 105 is engaged with a second mold 105d of the molding device 105 as shown in FIG. 19. The molding device 105 is in a closed configuration. After the engagement of the first mold 105c and the second mold 105d, at least one mold cavity 105b is formed. In some embodiments, an outlet 101a of the injector 101 is aligned with an outlet 103b of the runner plate 103, such that the injector 101 is communicable with a mold cavity 105b through the runner plate 103. In some embodiments, the outlets 103b-1 and 103b-2 are communicable with the mold cavities 105b-1 and 105b-2, respectively.

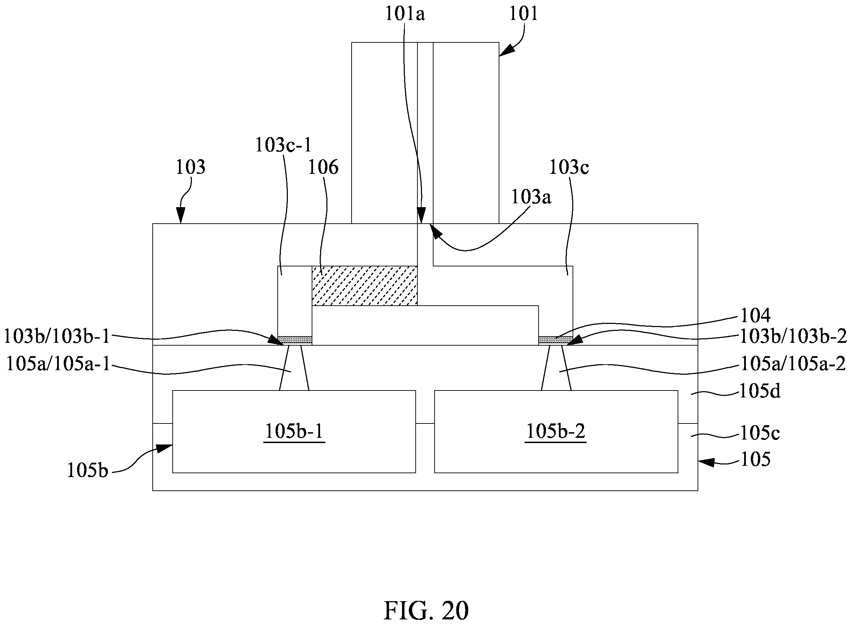

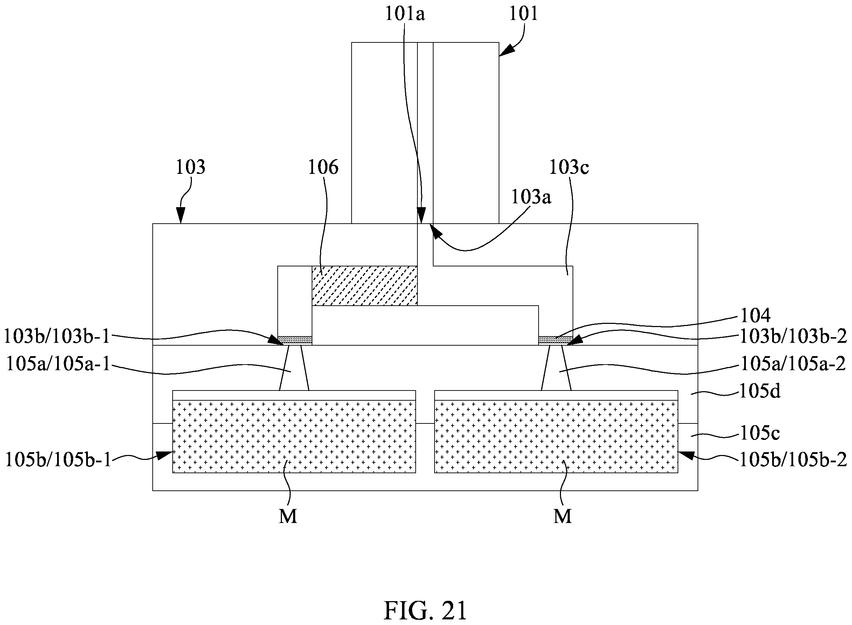

In some embodiments, a plug 106 is inserted into a runner 103c extending within the runner plate 103 as shown in FIG. 20. In some embodiments, the plug 106 is inserted into the runner 103c-1, as illustrated in FIG. 20 and FIG. 7. In some embodiments, the plug 106 is inserted before or after the engagement of the runner plate 103 and the molding device 105. After inserting the plug 106, a mixture M is injected into the mold cavity 105b from the injector 101 through the runner plate 103 as shown in FIG. 21. In some embodiments, a shot of the mixture M is injected into the mold cavity 105b-1 through the runners 103c-3 and 103c-5, and into the mold cavity 105b-2 through the runners 103c-2, 103c-4 and 103c-6, as illustrated in FIG. 7. In some embodiments, the gates 104 at the outlets 103b-3 and 103b-5 may be adjusted to allow faster flow rate or larger amount of the mixture M flowing into the mold cavity 105b-1. In some embodiments, the gates 104 at the outlets 103b-2, 103b-4 and 103b-6 may be adjusted to allow slower flow rate or lesser amount of the mixture M flowing into the mold cavity 105b-2.

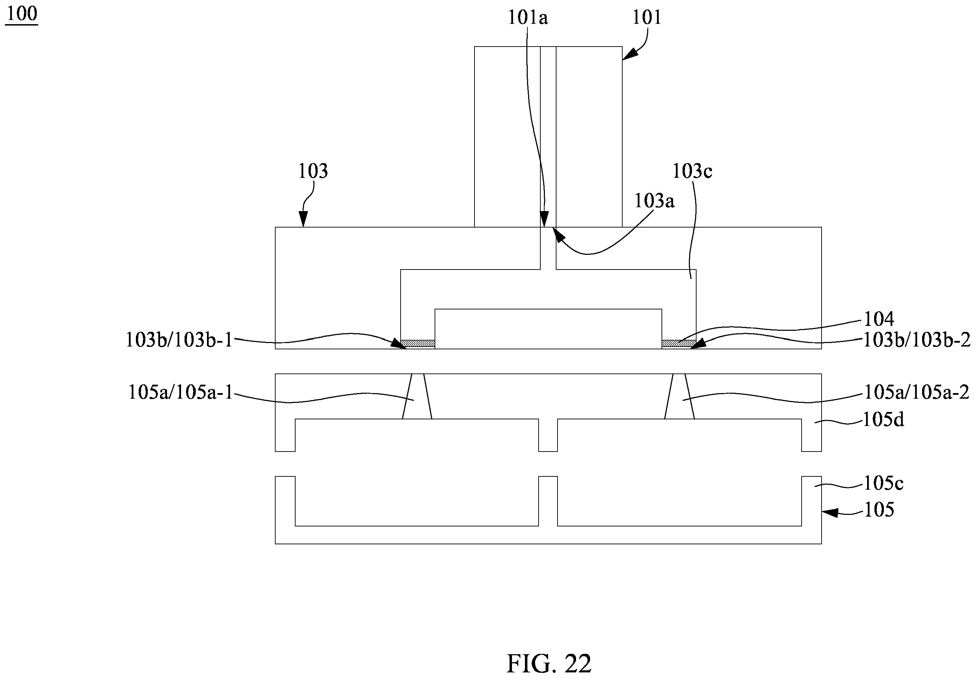

After the mixture M entering the mold cavities 105b-1 and 105b-2, the mixture M undergoes physical foaming to become a foamed article. After the formation of the foamed article, the foamed article is taken out from the molding device 105 after the first mold 105c is disengaged with the second mold 105d as shown in FIG. 22. In some embodiments, the plug 106 is removed from the runner 103c as shown in FIG. 22.

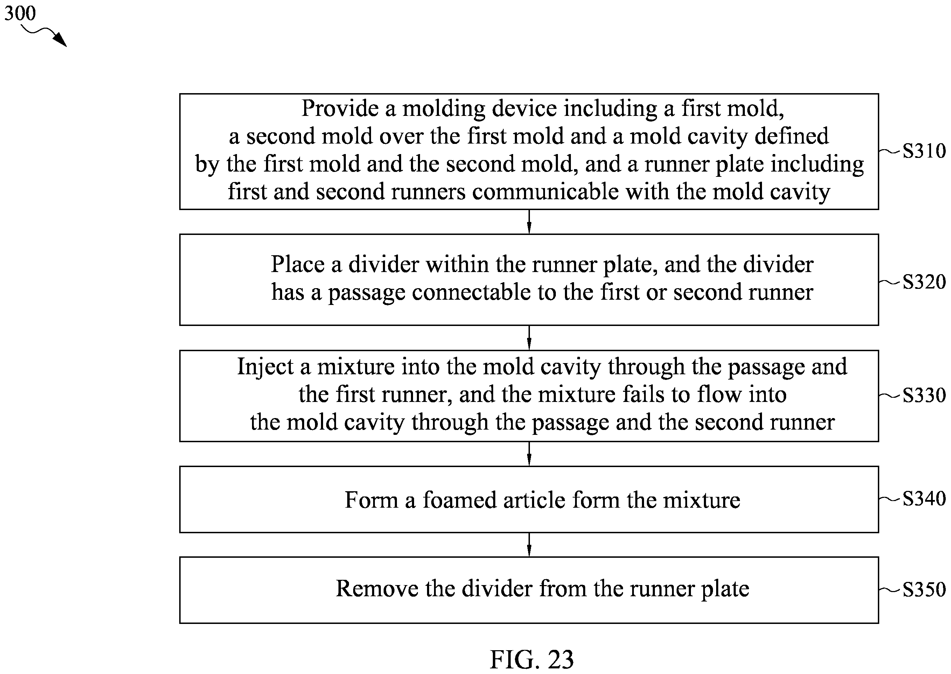

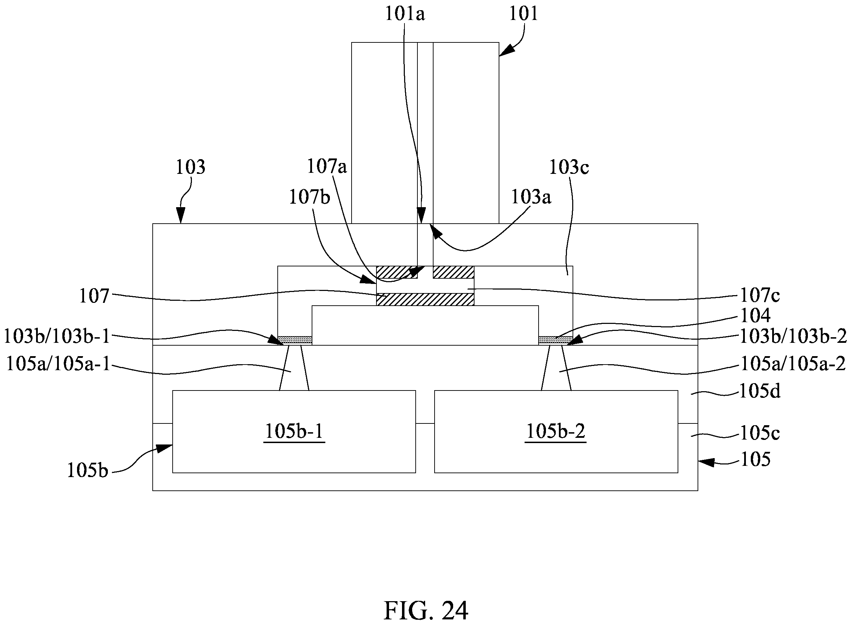

FIG. 23 is a flowchart showing an injection molding method 300 in accordance with some embodiments of the present disclosure. The injection molding method 300 includes the operations S310 through S350, and the description and illustrations are not deemed as a limitation of the sequence of the operations S310 through S350. FIGs. 24-32 are schematic cross-sectional views of various stages of the injection molding method 300. In some embodiments, the operations of the injection molding method 300 can be repeated and performed automatically. In some embodiments, the injection molding method 300 is performed by the injection molding system 100 of FIG. 1.

In operation S310, the molding device 105 and the runner plate 103 are provided. In some embodiments, the molding device 105 includes the first mold 105c, the second mold 105d and a mold cavity 105b defined by the first mold 105c and the second mold 105d engaged with each other, and the runner plate 103 includes first and second runners 103c extending within the runner plate 103. In operation S320, a divider is placed within the runner plate 103, and the divider has a passage connectable to the first or second runner 103c. Furthermore, the passage is alignable with the first runner or the second runner. In operation S330, the injection unit 130 is configured to inject a mixture from the mixing unit 120 into the mold cavity 105b of the molding device 105 through the injector 101, the passage and the first runner 103c, and then a foamed article is formed from the mixture in operation S340. It should be noted that the mixture from the injection unit 130 fails to flow into the mold cavity 105b through the passage and the second runner 103c. In operation S350, the divider is removed from the runner plate 103 after the formation of the foamed article. The divider is insertable into or removable from runner plate 103 when the runner plate 103 is disposed on the molding device 105.

In some embodiments, before placing the divider in operation S320, the injection unit 130 is configured to inject the mixture (or another mixture) into the mold cavity 105b through the injector 101 and the first and second runners 103c, and then another foamed article is formed from the mixture. In some embodiments, after the divider is removed from the runner plate 103, an additional divider is placed within the runner plate 103, and the additional divider is in different configuration form the removed divider.

In some embodiments, when the divider is placed within the runner plate 103, the passage of the divider is aligned with the first runner, and the passage is misaligned with the second runner. In some embodiments, the divider is rotatable relative to the runner plate 103 when the divider is placed within the runner plate 103 for the next injection of the mixture. For example, after rotating the divider, the passage of the divider changes from being aligned with the first runner to being aligned with the second runner, and the passage is misaligned with the first runner.

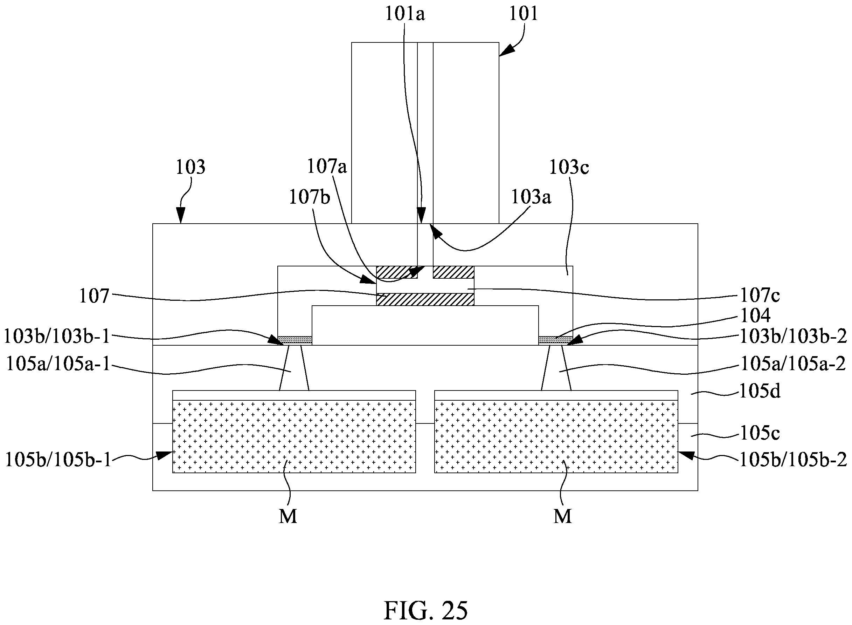

In some embodiments, the injection molding method 300 includes inserting a divider 107 into the runner 103c as shown in FIG. 24. In some embodiments, the divider 107 is inserted before or after the engagement of the runner plate 103 and the molding device 105. In some embodiments, the inlet 103a of the runner plate 103 is aligned with an inlet 107a of the divider 107, and an outlet 107b of the divider 107 is communicable with the outlet 103b of the runner plate 103. After inserting the divider 107, the mixture M is injected into the mold cavity 105b from the injector 101 through the runner plate 103 as shown in FIG. 25. In some embodiments, a shot of the mixture M is injected into the mold cavity 105b-1 through the runners 103c-1, 103c-3 and 103c-5, and into the mold cavity 105b-2 through the runners 103c-2, 103c-4 and 103c-6 as shown in FIG. 25 and FIG. 10. In some embodiments, the divider 107 distributes the shot of the mixture M evenly to the runners 103c-1, 103c-2, 103c-3, 103c-4, 103c-5 and 103c-6. As such, the mixture M entering the mold cavity 105b-1 is in substantially same amount as the mixture M entering the mold cavity 105b-2 as shown in FIG. 25.

After the mixture M entering the mold cavities 105b-1 and 105b-2, the mixture M undergoes physical foaming to become a foamed article. After the formation of the foamed article, the foamed article is taken out from the molding device. In some embodiments, the divider 107 is removed from the runner 103c if it is no longer necessary, if it is required to change to another divider 107 in different configuration, or if it is required to replace the divider 107 by another new divider 107, etc.

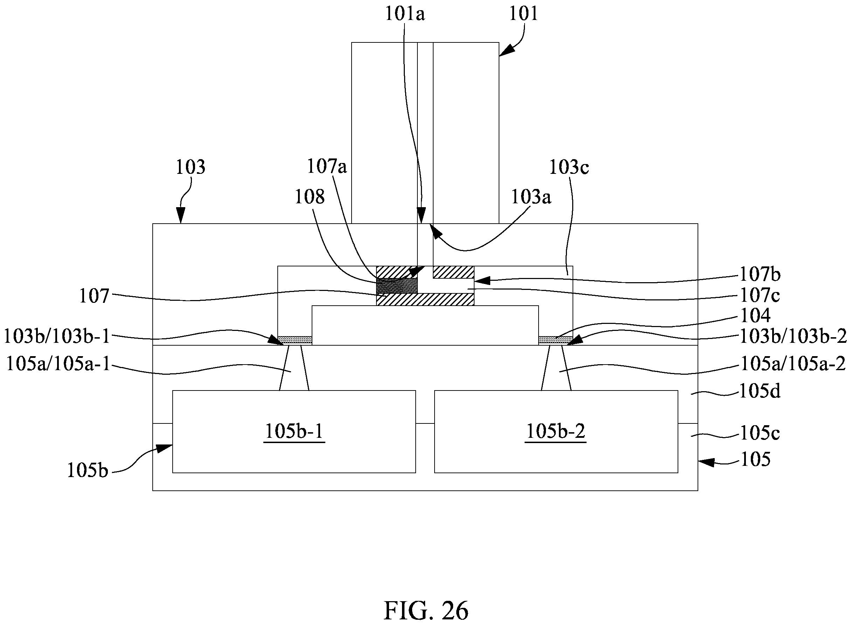

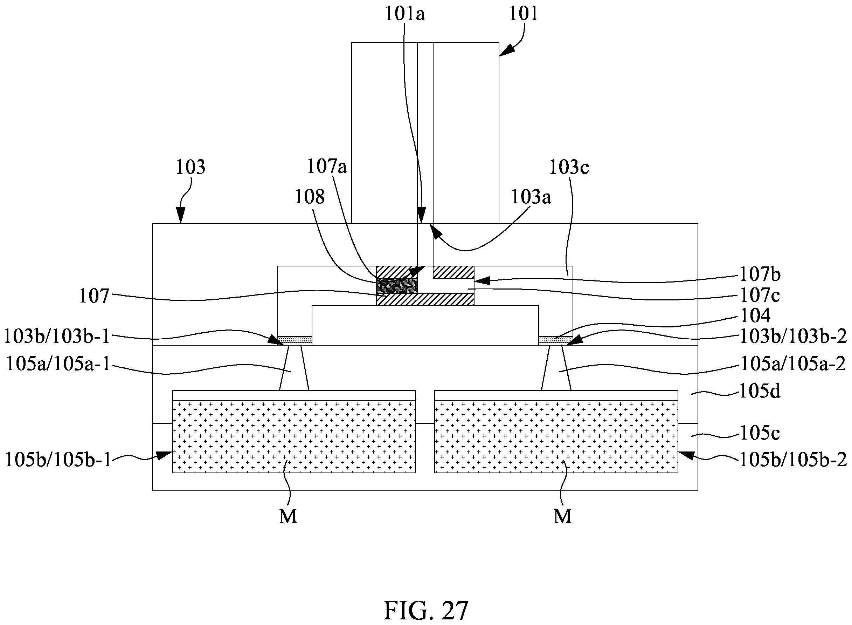

In some embodiments, the injection molding method 300 includes inserting a block 108 into a passage 107c of the divider 107 as shown in FIG. 26. In some embodiments, the block 108 is inserted before or after the engagement of the runner plate 103 and the molding device 105. In some embodiments, a shot of the mixture M is injected into the mold cavity 105b-1 through the runners 103c-3, 103c-5, and into the mold cavity 105b-2 through the runners 103c-2, 103c-4 and 103c-6, as shown in FIG. 27. In some embodiments, gates 104 at the outlets 103b-3 and 103b-5 may be adjusted to allow faster flow rate or larger amount of the mixture M flowing into the mold cavity 105b-1. In some embodiments, gates 104 at the outlets 103b-2, 103b-4 and 103b-6 may be adjusted to allow slower flow rate or lesser amount of the mixture M flowing into the mold cavity 105b-2.

After the mixture M entering the mold cavities 105b-1, 105b-2, the mixture M undergoes physical foaming to become a foamed article. After the formation of the foamed article, the foamed article is taken out from the molding device. In some embodiments, the block 108 is removed from the divider 107 if it is no longer necessary.

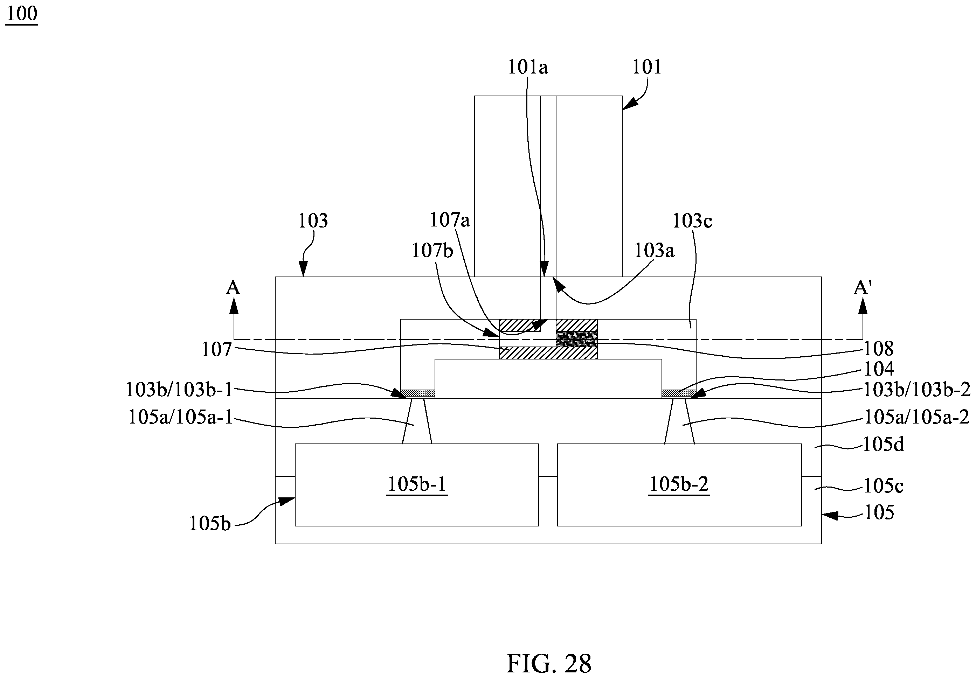

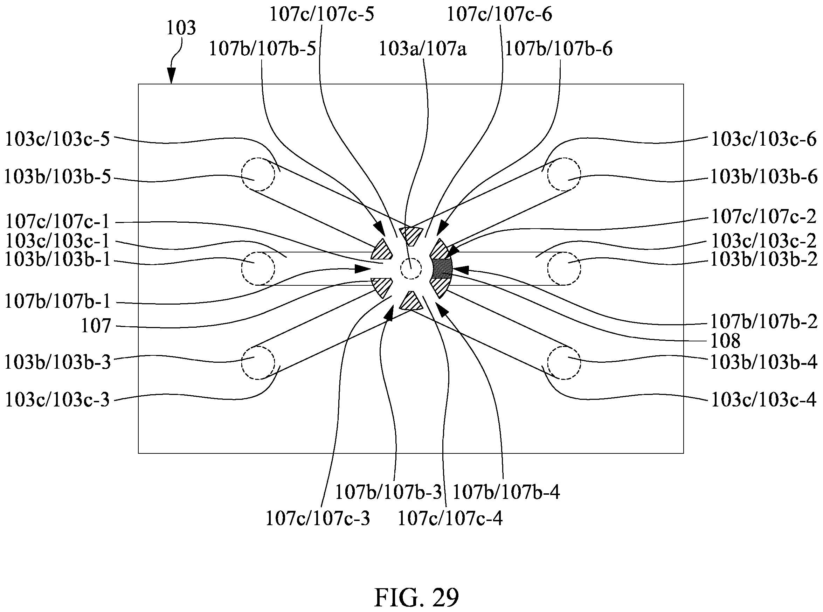

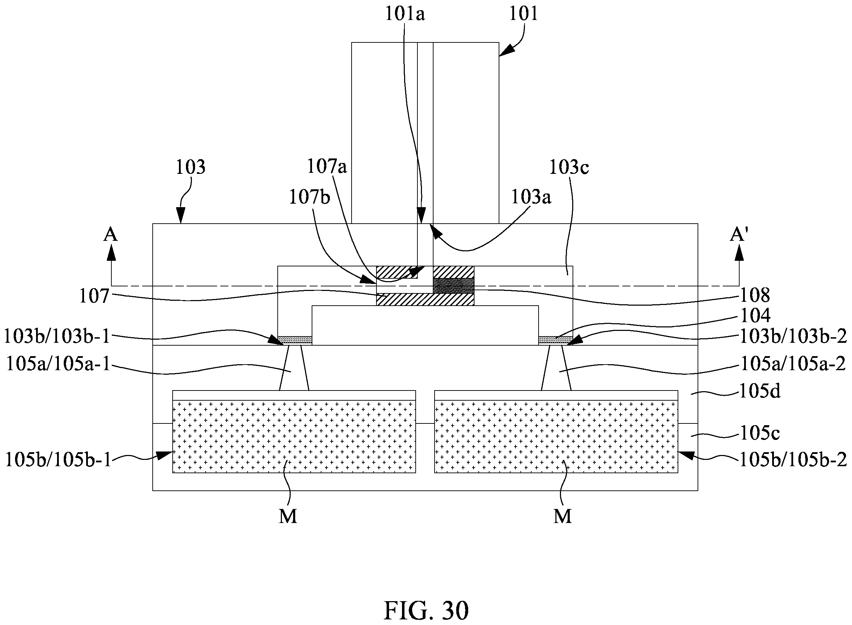

In some embodiments, the divider 107 is rotated when necessary (e.g. selecting the runners 103c to be used as desired, etc.). For example, the divider 107 (together with the block 108) is rotated clockwisely, such that the runner 103c-2 is blocked as shown in FIGs. 28 and 29. FIG. 29 illustrates a top cross-sectional view of FIG. 28 along the line AA'. After the rotation, a shot of the mixture M is injected into the mold cavity 105b-1 through the runners 103c-1, 103c-3 and 103c-5, and into the mold cavity 105b-2 through the runners 103c-4, 103c-6 as shown in FIG. 30. In some embodiments, the gates 104 at the outlets 103b-4 and 103b-6 may be adjusted to allow faster flow rate or larger amount of the mixture M flowing into the mold cavity 105b-2. In some embodiments, the gates 104 at the outlets 103b-1, 103b-3 and 103b-5 may be adjusted to allow slower flow rate or lesser amount of the mixture M flowing into the mold cavity 105b-1. After the mixture M entering the mold cavities 105b-1 and 105b-2, the mixture M undergoes physical foaming to become a foamed article. After the formation of the foamed article, the foamed article is taken out from the molding device.

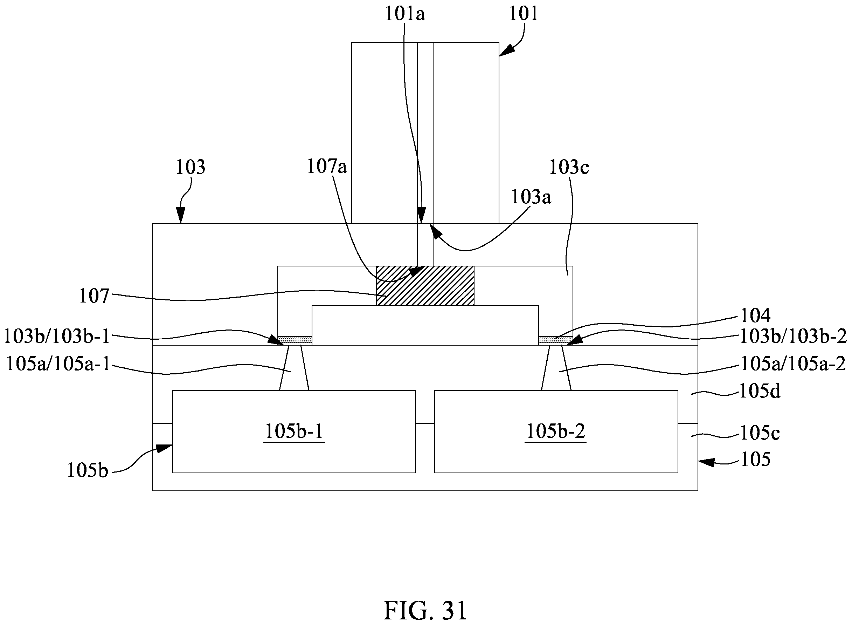

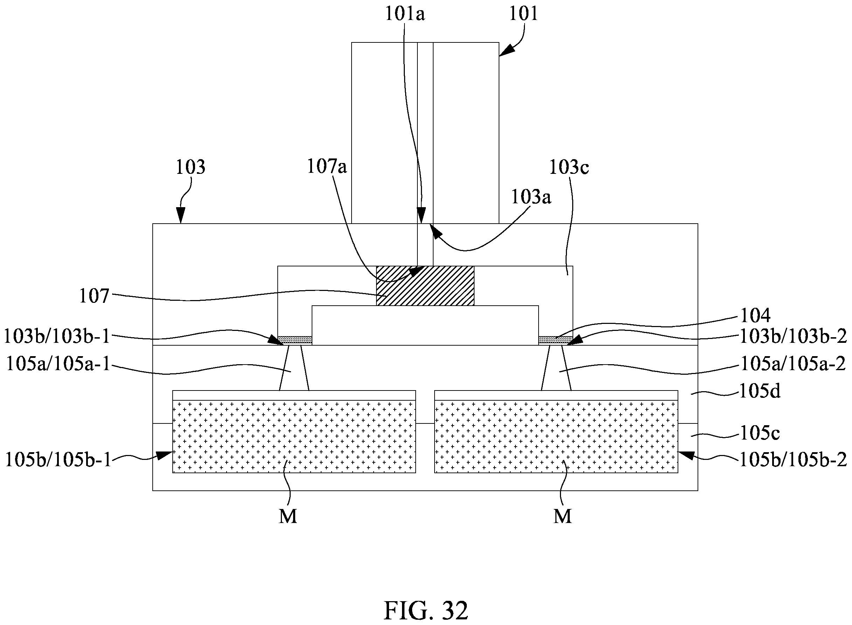

In some embodiments, the divider 107 in different configuration is inserted into the runners 103c as shown in FIG. 31 and FIG. 16. In some embodiments, the divider 107 is inserted before or after the engagement of the injector 101 and the runner plate 103. In some embodiments, the divider 107 is inserted before or after the engagement of the first mold 105c and the second mold 105d. In some embodiments, the divider 107 as shown in FIG. 31 and FIG. 16 does not have the passages 107c-1 and 107c-2. That is, mixture M is injected into the mold cavity 105b-1 through the runners 103c-3 and 103c-5, and into the mold cavity 105b-2 through the runners 103c-4 and 103c-6 as shown in FIG. 32. In some embodiments, the divider 107 distributes the shot of the mixture M evenly to the runners 103c-3, 103c-4, 103c-5 and 103c-6. After the mixture M entering the mold cavities 105b-1 and 105b-2, the mixture M undergoes physical foaming to become a foamed article. After the formation of the foamed article, the foamed article is taken out from the molding device. In some embodiments, the divider 107 is removed from the runner 103c.

According to the embodiments of the present disclosure, a changeable plug or a changeable divider is used in an injection molding system. In some embodiments, a plug is inserted in a runner of a runner plate for blocking the runner when necessary and preventing formation of slug or scrap within the runner. In some embodiments, a divider is placed between a sprue and the runners of the runner plate for directing a molding material into a selected runner, readily varying a number of runners to be used in a runner plate, and readily removing molding material residual remained within the runners for a long time.

The foregoing outlines features of several embodiments so that those skilled in the art may better understand the aspects of the present disclosure. Those skilled in the art should appreciate that they may readily use the present disclosure as a basis for designing or modifying other processes and structures for carrying out the same purposes and/or achieving the same advantages of the embodiments introduced herein. Those skilled in the art should also realize that such equivalent constructions do not depart from the spirit and scope of the present disclosure, and that they may make various changes, substitutions, and alterations herein without departing from the spirit and scope of the present disclosure.

Moreover, the scope of the present application is not intended to be limited to the particular embodiments of the process, machine, manufacture, composition of matter, means, methods and steps described in the specification. As one of ordinary skill in the art will readily appreciate from the disclosure of the present disclosure, processes, machines, manufacture, compositions of matter, means, methods, or steps, presently existing or later to be developed, that perform substantially the same function or achieve substantially the same result as the corresponding embodiments described herein, may be utilized according to the present disclosure. Accordingly, the appended claims are intended to include within their scope such processes, machines, manufacture, compositions of matter, means, methods and steps.

## Claims

1. An injection molding method, comprising:
providing a molding device and a runner plate over the molding device, wherein the molding device comprises a first mold, a second mold over the first mold, and a mold cavity defined by the first mold and the second mold, the runner plate includes first and second runners communicable with the mold cavity and extending within the runner plate;
placing a first divider within the runner plate, wherein the first divider has a passage connectable to the first runner or the second runner;
injecting a first mixture into the mold cavity through the passage and the first runner, wherein the first mixture fails to flow into the mold cavity through the passage and the second runner; and
forming a first foamed article from the first mixture inside the mold cavity.

2. The injection molding method of Claim 1, further comprising, prior to the placement of the first divider:
injecting a second mixture into the mold cavity through the first runner and the second runner; and
forming a second foamed article from the second mixture inside the mold cavity.

3. The injection molding method of Claim 1 or 2, further comprising:
removing the first divider from the runner plate after the formation of the first foamed article; and
placing a second divider within the runner plate,
wherein the second divider is in different configuration from the first divider.

4. The injection molding method of any one of Claims 1 to 3, wherein the placing the first divider within the runner plate further comprises:
aligning the passage with the first runner, and misaligning the passage with the second runner.

5. The injection molding method of any one of Claims 1 to 4, further comprising:
inserting a block into the passage after the formation of the first foamed article.

6. The injection molding method of any one of Claims 1 to 5, further comprising:
rotating the first divider within the runner plate;
injecting a third mixture into the mold cavity through the passage and the second runner, wherein the third mixture fails to flow into the mold cavity through the passage and the first runner; and
forming a third foamed article from the third mixture inside the mold cavity.

7. The injection molding method of Claim 6, wherein rotating the first divider within the runner plate further comprises:
aligning the passage with the second runner and misaligning the passage with the first runner.

8. An injection molding method, comprising:
providing a molding device and a runner plate over the molding device, wherein the molding device comprises a first mold, a second mold over the first mold, and a mold cavity defined by the first mold and the second mold, the runner plate includes first and second runners communicable with the mold cavity and extending within the runner plate;
inserting a first plug into the first runner;
injecting a first mixture into the mold cavity through the second runner, wherein the first mixture fails to flow into the mold cavity through the first runner; and
forming a first foamed article from the first mixture inside the mold cavity.

9. The injection molding method of Claim 8, further comprising, prior to the insertion of the first plug:
injecting a second mixture into the mold cavity through the first runner and the second runner; and
forming a second foamed article from the second mixture inside the mold cavity.

10. The injection molding method of Claim 8 or 9, further comprising:
removing the first plug from the first runner after the formation of the first foamed article.

11. The injection molding method of Claim 10, further comprising, after the removal of the first plug:
injecting a second mixture into the mold cavity through the first runner and the second runner; and
forming a second foamed article from the second mixture inside the mold cavity.

12. The injection molding method of any one of Claims 8 to 11, further comprising:
inserting a second plug into the second runner after the formation of the first foamed article.

13. An injection molding system, comprising:
a molding device, comprising a first mold, a second mold over the first mold and a mold cavity defined by the first mold and the second mold engaged with the first mold;
a runner plate, disposed over the molding device and including first and second runners communicable with the mold cavity and extending within the runner plate; and
a divider disposed within the runner plate and having a passage connectable to the first runner or the second runner,
wherein the divider is configured to block a mixture flowing into the mold cavity through one of the first and second runners and allow the mixture flowing into the mold cavity through the passage and another one of the first and second runners.

14. The injection molding system of Claim 13, wherein the passage is alignable with the first runner or the second runner.

15. The injection molding system of Claim 13 or 14, further comprising:
a block disposed within the passage to block the mixture flowing through the passage.
